Europäisches Patentamt

European Patent Office

Office européen des brevets

(19)

(11) Veröffentlichungsnummer : **0 171 569
B1**

(12)

# EUROPÄISCHE PATENTSCHRIFT

(45) Veröffentlichungstag der Patentschrift :
30.09.87

(21) Anmeldenummer : 85108120.8

(22) Anmeldetag : 01.07.85

(51) Int. Cl.⁴ : **B 60 T 15/02**

(54) Handbremsventil für Bremsanlagen, insbesondere von Kraftfahrzeugen.

(30) Priorität : 31.07.84 DE 3428214
28.08.84 DE 3431559

(43) Veröffentlichungstag der Anmeldung :
19.02.86 Patentblatt 86/08

(45) Bekanntmachung des Hinweises auf die Patenterteilung : 30.09.87 Patentblatt 87/40

(84) Benannte Vertragsstaaten :
AT BE CH DE FR GB IT LI NL SE

(56) Entgegenhaltungen :
DE-A- 2 905 040
FR-A- 2 102 313
FR-A- 2 201 408
FR-A- 2 355 696
FR-A- 2 458 436
GB-A- 1 097 400

(73) Patentinhaber : KNORR-BREMSE AG
Moosacher Strasse 80 Postfach 401060
D-8000 München 40 (DE)

(72) Erfinder : Pellecuer, François
Leonhard-Frank-Strasse 1
D-8000 München 40 (DE)
Erfinder : Schöttler, Franz
Bismarckstrasse 24
D-8000 München 40 (DE)
Erfinder : Vollmer, Otto
Joergstrasse 31
D-8000 München 40 (DE)

EP 0 171 569 B1

Jouve, 18, rue St-Denis, 75001 Paris, France

## Beschreibung

Die Erfindung betrifft ein Handbremsventil nach dem Gattungsbegriff des Patentanspruches 1.

Derartige Handbremsventile, z. B. wie sie aus der DE-A-2 905 040 schon bekannt sind, dienen zur Betätigung einer mit Federspeicherbremszylindern ausgerüsteten Feststell- und Hilfsbremsanlage, welche durch Betätigung des Handbremsventils feinfühlig abstufbar ist und gleichzeitig zur Betätigung der Anhänger-Bremsanlage verwendet werden kann. Bei der Betätigung von Handbremsventilen dieser Art ist ein Kipphebel, ausgehend von der Fahrposition, in eine Hilfsbremsposition schwenkbar, wobei in diesem Drehbereich ein feinfühlig abgestuftes Betätigen der Feststell- und Hilfsbremsanlage als auch der durch das Handbremsventil steuerbaren Anhänger-Bremsanlage möglich ist. Bei Erreichen der sogenannten Parkbremsstellung ist eine absolut sichere Verriegelung des Kipphebels erforderlich, um ein unbeabsichtigtes Lösen der Bremsanlage zu verhindern.

Aus der vorgenannten Feststell- bzw. Parkbremsstellung kann der Kipphebel in eine Prüf- oder Kontrollstellung bewegt werden ; in dieser Stellung gestattet das Handbremsventil bei eingelegter Parkbremse eine Kontrolle der alleinigen Bremswirkung der Bremsanlage des Zugfahrzeuges bei gelöster Bremse im Anhänger.

Die Schwenkbewegungen des Kipphebels unter, Führung der Schaltkulisse werden mit Hilfe eines am äußeren Ende des Kipphebels angeordneten Schaltgriffes vollzogen, wobei der Schaltgriff bei Einschwenken des Kipphebels in die der Parkbremsstellung entsprechende Kulissenöffnung der Schaltkulisse in diese eintaucht. Der Abstand des Schaltgriffes zum Gehäusekopf verkürzt sich also etwas, wenn die Parkbremsstellung erreicht ist. Ein im Bereich der Schaltkulisse mit dieser zusammenwirkender, über eine Hülse mit dem Schaltgriff verbundener Rastkörper taucht entsprechend der nach innen gerichteten Bewegung des Schaltgriffes unter der Verspannung einer Feder in die Kulissenöffnung ein, um hierdurch die der Parkbremsstellung entsprechende Winkelposition des Schaltgriffes zu rastieren. Der Rastkörper kann also nur dann entriegelt werden, wenn der ihn tragende Schaltgriff auf sein ursprüngliches Niveau wieder nach außen gerichtet gezogen wird. Bei Handbremsventilen, welche bei Verwendung in Nutzfahrzeugen einem verhältnismäßig rauhen Betrieb unterliegen, ist es unbedingt erforderlich, daß der Rastkörper in Position der Parkbremsstellung tatsächlich innerhalb der Kulissenöffnung der Schaltkulisse einrastet, also nach innen gerichtet eintaucht.

Wenn der Fahrer den Schaltgriff des Handbremsventils aud der Fahr- oder Lösestellung in Richtung der Parkbremsstellung verschwenkt, dann kann es vorkommen, daß er nicht nur eine reine, in Umfangrichtung verlaufende Drehbewegung vollführt, sondern daß er gleichzeitig unbeabsichtigt am Schaltgriffende zieht. Da der Rastkörper mit dem Schaltgriff verbunden ist, kann hierdurch das selbsttätige Eintauchen des Rastkörpers in die Kulissenöffnung gestört sein. Hierbei leidet die Feinfühligkeit in der Ventilbetätigung, d. h. es kann unter Umständen problematisch sein, sich darüber zu vergewissern, ob die selbsttätige Rastierung im Bereich der Parkstellung erreicht ist oder nicht.

Davon ausgehend besteht die Aufgabe der Erfindung darin, ein Handbremsventil der in Rede stehenden Art so auszugestalten, daß die Rastierbewegung des Rastkörpers vollständig unbeeinflußt von den am Kipphebel einwirkenden Kräften während der Kipphebelbetätigung bleibt. Es soll demnach insbesondere verhindert werden, daß eine die Feinfühligkeit der Ventilbetätigung beeinträchtigende Überlagerung von Schalt- und Rastierkräften stattfindet ; die Möglichkeit von unbestimmbaren Zwischenstellungen des Rastkörpers soll absolut sicher ausgeschaltet sein.

Zur Lösung dieser Aufgabe dienen die Merkmale nach dem Kennzeichnungsteil des Patentanspruches 1.

Der Kipphebel ist durch den Fahrer des Fahrzeuges in die gewünschten Schaltpositionen verschwenkbar, ohne daß die Rastierbewegung des Rastkörpers beeinträchtigende Einflüsse auftreten können, da die zum Schwenken des Kipphebels an diesem auszuübende Betätigungkraft ohne Beeinflussung auf den mit der Schalthülse in Wirkeingriff gelangenden Rastkörper bleibt. Der Rastkörper vollführt demnach gleichsam isoliert vom Schaltgriff im Bereich der Kulissenöffnung seine radial nach innen gerichtete Rastierbewegung, selbst dann, wenn der Fahrer am Schaltgriff eine in gewissem Sinn unkoordinierte Schwenkbewegung ausführt, d. h. wenn gleichzeitig während des Verschwenkens eine nach außen gerichtete Kraftkomponente am Schaltgriff einwirkt. Da die Rastierbewegung des Rastkörpers unbeeinflußt bleibt von den Kräften am Schaltgriff, kann die zum Einrasten erforderliche, am Rastkörper einwirkende Feder relativ klein gehalten werden. Dies wiederum erlaubt die Ausbildung von kleinen Übergangsradien an der Schaltkulisse, also im Bereich des Übergangs in die Kulissenöffnung, als auch an dem in die Kulissenöffnung eintauchenden Rastkörper, was zu einem kleinen, empfindlichen Einrastbereich führt, dem Hauptkriterium jeder sicheren Rastiervorrichtung.

Obwohl der Rastkörper unbeeinflußt von äußeren Kräften am Schaltgriff in die Rastier- bzw. Kulissenöffnung der Schaltkulisse einzutauchen vermag, steht er mit der mit dem Schaltgriff verbundenen, die Schaltstange des Kipphebels umgehenden Schalthülse derart in Wirkverbindung, daß er durch den Schaltgriff um ein zusätzliches Maß radial nach innen gerichtet gedrückt werden kann, wenn der Kipphebel in die Kontrollstellung verschwenkt werden soll. Des weiteren ist es mit Hilfe des Schaltgriffes möglich, den Rastkörper aus der Kulissenöffnung herauszuziehen, d. h. auf das Niveau der Oberseite der Schaltkulisse anzuheben, wenn der Kipphebel aus dem Bereich der Parkbremsstellung in die Fahr- oder Lösestellung verschwenkt werden soll.

Bei einer besonders vorteilhaften Ausführungsform ist im Inneren des Schaltgriffes lediglich eine einzelne Feder vorgesehen, welche in einer die Schaltstange konzentrisch umgebenden Lage dazu dient, den Schaltgriff sowohl bei nach innen gerichteter als auch nach außen gerichteter Betätigung desselben in Richtung seiner Ausgangslage zu verspannen. Die Feder stützt sich hierbei in baulich einfacher Weise an ihrem inneren als auch an ihrem äußeren Ende an Anschlägen sowohl der Schaltstange als auch der Innenfläche des Schaltgriffes ab, sodaß die Feder bei einer Relativverschiebung des Schaltgriffes entweder gegenüber dem inneren oder gegenüber dem äußeren Anschlag der Schaltstange verspannbar ist.

Vorteilhafte Ausgestaltungen und Weiterbildungen sind in den weiteren Patentansprüchen aufgeführt.

Die Erfindung ist nachfolgend anhand von Ausführungsbeispielen unter Bezugnahme auf die beigefügte Zeichnung erläutert.

Figur 1 ist eine Schnittansicht des Kipphebels unter Darstellung seiner Schaltpositionen A, B, C und D, wobei das Zusammenwirken des Rastkörpers mit der Schaltkulisse aufgezeigt ist ;

Figur 2 ist eine Draufsicht auf die in der Anordnung nach Fig. 1 verwendete Schaltkulisse ;

Figur 3 ist eine der Fig. 1 vergleichbare Ansicht eines Kipphebels gemäß einer weiteren Ausführungsform der Erfindung.

Figur 4 ist eine der Figur 1 vergleichbare Ansicht eines Kipphebels (ohne Darstellung der Schaltkulisse) gemäß einer weiteren Ausführungsform der Erfindung.

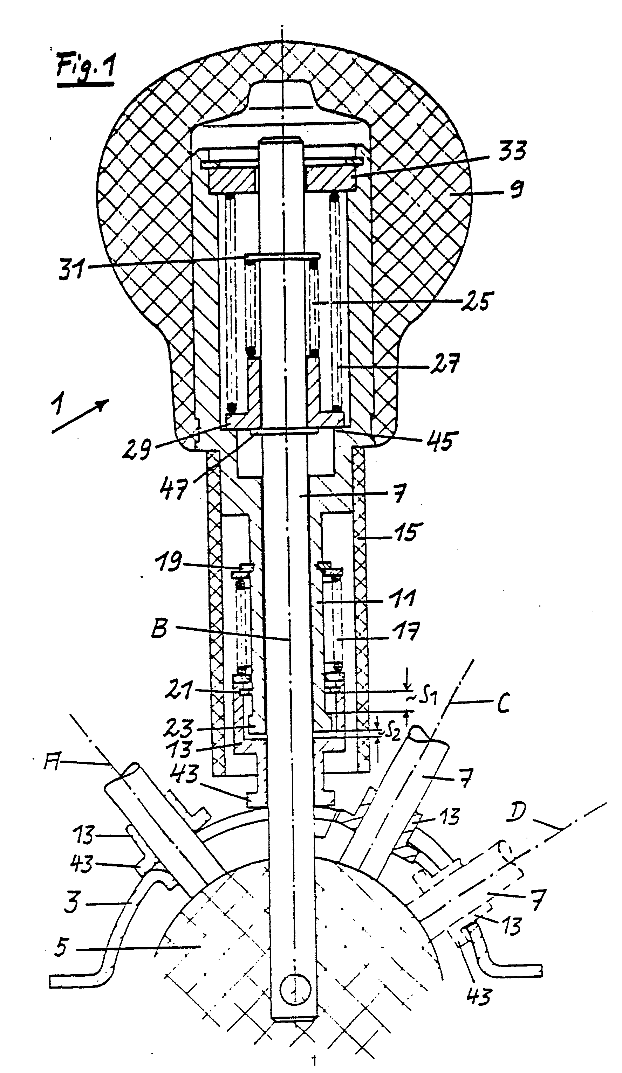

In Fig. 1 der Zeichnung ist ein erfindungsgemäßer Kipphebel 1 eines Handbremsventils in seinem Zusammenwirken mit einer Schaltkulisse 3 wiedergegeben. Der Kipphebel 1 wirkt über einen an dem im (nicht dargestellten) Gehäusekopf des Handbremsventils befindlichen Ende angebrachten Steuerkörper 5 auf einen (nicht dargestellten) Ventilmechanismus ein, welcher zur Steuerung der Hilfs- und Feststellbremsanlage in Lastkraftfahrzeugen mit Anhängeranschluß dient.

Der Kipphebel 1 ist mit einer Schaltstange 7 versehen, welche an ihrem gemäß Darstellung oberen Ende von einem Schaltgriff 9 umgeben ist. Der Schaltgriff 9 ist mit einer Schalthülse 11 verbunden, die sich gemäß Darstellung in einen Rastkörper 13 erstreckt. Der Schaltgriff 9 ist auf die Schalthülse 11 unverlierbar aufgeschoben ; es ist auch möglich, daß der Schaltgriff 9 in anderer Weise mit der Schalthülse 11 verbunden ist, so kann der Schaltgriff auch materialeinheitlich mit der Schalthülse gefertigt sein. Eine Schutzhülse 15, welche ihrerseits auf die Schalthülse 11 aufgeschoben und unverschiebbar zu dieser gehalten ist, umgibt den gemäß Darstellung nach Fig. 1 unteren Bereich der Schaltstange. Die Schutzhülse 15 umfaßt vorzugsweise den Rastkörper 13, welcher sich mittels einer Rastierfeder 17 an einem mit der Schalthülse verbundenen Sicherungsring 19 abstützt. Auf diese Weise vermag die Rastierfeder 17 den Rastkörper 13 in nachfolgend beschriebener Weise nach unten gerichtet zu drücken, d. h. in Richtung des Steuerkörpers 5. Am Rastkörper 13 ist innenseitig ein Anschlagring 21 fixiert, welcher sich bei nach unten gerichteter Bewegung des Rastkörpers an einer Schulter 23 der Schalthülse 11 anzulegen vermag.

Im gemäß Darstellung nach Fig. 1 oberen Bereich des Kipphebels 1 sind innerhalb des Schaltgriffes 9 zwei Federn vorgesehen, eine innere Hebefeder 25 und eine äußere Feder 27. Die beiden Federn stützen sich an ihrem gemäß Darstellung unteren Ende an einer verschiebbar an der Schaltstange 7 gehaltenen Anschlaghülse 29 ab. Das obere Ende der Hebefeder 25 ist an einem mit der Schaltstange 27 verbundenen Anschlagring 31 abgestützt, während das obere Ende der Feder 27 an einer innenseitig von der Schalthülse 11 auskragenden Schulter 33 abgestützt ist.

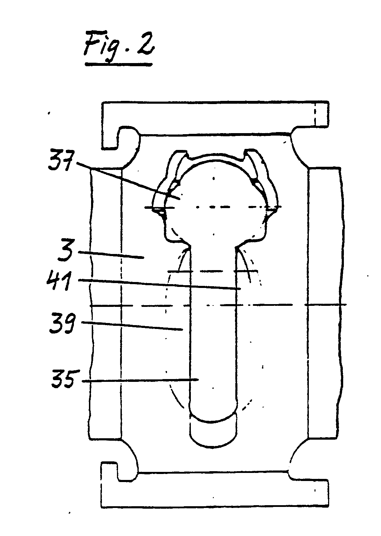

Der Rastkörper 13 wirkt, wie vorstehend ausgeführt wurde, mit der Schaltkulisse 3 zusammen, um die Schaltpositionen des Handbremsventils festzulegen. Gemäß Fig. 2 besitzt die ihrem Aufbau nach an sich bekannte Schaltkulisse 3, welche als einfaches Stanzteil gefertigt sein kann, einen sogenannten Kulissenschlitz 35, der sich vom gemäß Fig. 2 unteren Ende des Schlitzes bis in eine erweiterte Kulissenöffnung 37 erstreckt. Zu beiden Seiten des zur Führung des Kipphebels 1 dienenden Kulissenschlitzes 35 befinden sich Führungsbahnen 39 und 41, auf welchem der in Fig. 1 dargestellte Rastkörper zwischen den nachfolgend beschriebenen Positionen A und B entlanggleitet, d. h. also, solange sich die Schaltstange 7 innerhalb des Führungsbereiches des Kulissenschlitzes befindet. Am gemäß Fig. 2 oberen Ende des Kulissenschlitzes 35, d. h. kurz vor dem Übergang in die Kulissenöffnung 37, können beidseitig Druckpunktanschläge (nicht dargestellt) vorgesehen sein. Diese stellen sicher, daß der Rastkörper 13, einen spürbaren Widerstand vermittelnd, gegen die Druckpunktanschläge aufläuft, bevor er in nachfolgend beschriebener Weise in die Kulissenöffnung 37 einzutauchen vermag. Durch das Anschlagen und Aufgleiten des Rastkörpers an den Druckpunktanschlägen wird demnach ein bestimmter Widerstand hervorgerufen, welcher für den den Schaltgriff betätigenden Fahrer des Fahrzeugs spürbar wird und ihm als Indiz für die Position des Schaltgriffes dient. Derartige Druckpunktanschläge sind jedoch für die Funktion der Schaltkulisse nicht unbedingt erforderlich, insbesondere dann, wenn wie bei der erfindungsgemäßen Konstruktion ein kleiner, empfindlicher Einrastbereich infolge kleiner Übergangsradien an Schaltkulisse und Rastkörper besteht.

## Position A : Lösestellung

Wenn sich der Kipphebel 1 in der in Fig. 1 schematisch dargestellten Position A, d. h. in der Löse- oder Fahrstellung befindet, dann liegt er unter der Vorspannung von am Steuerkörper 5 angreifenden (nicht dargestellten) Rückholfedern, welche gem. Fig. 1 gegen den Uhrzeigersinn gerichtet wirken, in Anschlagposition am Ende des Kulissenschlitzes 35 an. In dieser Lage des Kipphebels befindet sich der (nicht dargestellte) Ventilmechanismus des Handbremsventils in einer Position, in welcher sowohl die zur Federspeicherbremsanlage als auch zum Anhängersteuerventil führenden Leitungen belüftet sind.

Wird der Kipphebel 1, ausgehend von der Position A, entgegen der Wirkung der (nicht dargestellten) Rückholfedern im Uhrzeigersinn gerichtet bewegt, so wird nach dem Durchlaufen eines bestimmten Betätigungswinkels mit dem gestuften Abbremsen begonnen, das heißt, die Federspeicherbremszylinder und die indirekte Steuerkammer des Anhängersteuerventils werden entsprechend der Winkellage des Kipphebels entlüftet. So baut sich z. B. innerhalb eines Betätigungsbereiches von 10 bis 55 Winkelgrad der Druck in den Federspeicherbremszylindern und in der indirekten Steuerkammer der Anhängersteuerventils proportional zum Betätigungsweg des Kipphebels ab.

## Position B : Hilfsbremsstellung

Zwischen den Positionen A und B wird in vorstehend beschriebener Weise ein abgestuftes Bremsen durchgeführt. Erreicht der Kipphebel bei Verdrehen gegen die Kraft der (nicht dargestellten) Rückholfedern die Position B, dann ist das Ende der Hilfsbremsung, die Hilfsbremsstellung erreicht, welche im wesentlichen der Vollbremsstellung des Bremsventils entspricht. Bei Vorhandensein von Druckpunktanschlägen beginnt der Rastkörper an diesen anzuschlagen bzw. aufzulaufen, mit der Folge, daß der den Kipphebel betätigende Fahrer des Fahrzeugs einen gewissen Widerstand spürt. Dieser Widerstand teilt sich dem Fahrer mit, da der Rastkörper bei Auflaufen auf die Druckpunktanschläge gegenüber erhöhtem Widerstand verschoben werden muß. Die dem Rastkörper hierbei nach oben gerichtet erteilte Relativverschiebung zur Schalthülse 11 ist möglich, da zwischen dem unteren Ende der Schulter 23 und der zugewandten Anschlagfläche des Rastkörpers ein gewisses Spiel besteht (Fig. 1).

## Position C : Parkbremsstellung

Wenn der Kipphebel die Position C erreicht hat, dann ist der Rastkörper 13 gegenüber der Kulissenöffnung 37 (Fig. 1 und 2) frei, das heißt, daß die zwischen den Positionen A und B vorgespannte Rastierfeder 17 den Rastkörper nach unten gerichtet verschiebt, derart, daß der Rastkörper in die Kulissenöffnung 37 eintaucht und sich somit in der Parkbremstellung befindet. Für das Eintauchen des Rastkörpers durch die Kraft der Rastierfeder 17 steht der in Fig. 1 dargestellte Weg S1, der sog. Einrastweg, zur Verfügung. Ist der am unteren Ende des Rastkörpers ausgebildete Rastbund 43 unterhalb des Niveaus der Führungsbahnen der Schaltkulisse, dann ist ein selbsttätiges Rückführen des Kipphebels unter der Eiwirkung der (nicht dargestellten) Rückholfeder nicht mehr möglich, da der Rastkörper mit seinem Rastbund 43 an der inneren Stirnfläche der Kulissenöffnung 37 anschlägt und demnach der Kipphebel an einem Weiterdrehen gesperrt ist. In dieser Parkbremsstellung, der Position C, sind die Federspeicherbremszylinder des Fahrzeugs entlüftet; gleichzeitig ist der Anhänger gebremst.

Aus der vorstehenden Funktionsbeschreibung ist erkennbar, daß sich die Rastierbewegung des Rastkörpers 13 vollständig isoliert von etwaigen Krafteinflüssen am Schaltgriff 9 vollzieht. Sollte der das Handbremsventil betätigende Fahrer beim Drehen des Kipphebels eine im gewissen Sinne unkoordinierte Bewegung ausführen, derart, daß die Kraft nicht nur in Umfangsrichtung wirkt, sondern auch axial nach außen gerichtet, dann bleibt dies ohne Einfluß auf den Rastkörper 13, welcher durch die Rastierfeder 17 stets nach unten, das heißt in Richtung des Steuerkörpers 5 verspannt ist, wenn sich der Kipphebel zwischen den Positionen A und B befindet. Die Hebefeder 25 kann verhältnismäßig stark ausgebildet sein, so daß zusätzlich verhindert wird, daß unbeabsichtigte, radiale, das heißt nach außen gerichtete Bewegungen am Schaltgriff 9 zur Wirkung kommen, falls der Kipphebel 1 heftig betätigt, also « gerissen » wird.

## Position D : Kontrollstellung

In der Parkbremsstellung gemäß Position C, also bei eingelegter Feststellbremse, gestattet das Handbremsventil eine Kontrolle der alleinigen Bremswirkung der Federspeicherbremsanlage des Fahrzeuges, indem die Bremse im Anhänger zu diesem Zweck gelöst wird. Hierbei übt der Fahrer des Fahrzeuges in der Parkbremsstellung auf den Schaltgriff 9 einen gemäß Fig. 1 nach innen gerichteten Druck aus. Wenn der Schaltgriff 9 in der Parkbremsstellung des Kipphebels (Position C) nach innen gerichtet gedrückt wird, dann legt sich die Schulter 23 der Schalthülse 11 nach Durchlaufen des Spiels S2 an der zugewandten Anschlagfläche des Rastkörpers 13 an, so daß nachfolgend die Schalthülse 11 mit dem Rastkörper 13 nach innen gerichtet verschiebbar ist. Der Rastkörper 13 taucht so weit nach innen gerichtet ein, daß er nunmehr durch nachfolgendes Verschwenken des Kipphebels 1 unterhalb des Niveaus der Schaltkulisse 3 entlanggleiten kann und auf diese Weise in die Position D verschwenkbar ist. Die Position D ist die sog. Kontrollstellung, in welcher mit Hilfe eines (nicht dargestellten) Ventilmechanismus eine Belüftung der zum Anhängersteuerventil führenden Leitung vollzogen wird. Dadurch wird die Bremse im Anhänger gelöst, so daß sich die Bremswirkung des Zugfahrzeuges allein kontrollieren läßt. Auch diese Verschwenkung in die Position D geschieht wie bei den zuvor beschriebenen Schwenkbewegungen entgegen der Kraft der (nicht dargestellten) Rückholfedern, welche bestrebt sind, den Kipphebel in die Lösestellung A zurückzuführen. Solange die Kontrolle der alleinigen Bremswirkung der Federspeicherbremsanlage des Zugfahrzeuges in der Position D durchgeführt wird, muß also der Kipphebel 1 festgehalten werden. Beim Loslassen bewegt er sich automatisch in die Parkbremsstellung zurück. Durch das Niederdrücken des Schaltgriffes 9 und der mit ihm verbundenen Schalthülse 11 wurde die Feder 27 gespannt, da sich bei diesem Niederdrücken der Abstand zwischen der Schulter 33 der Schalthülse und der Anschlaghülse 29 verkürzt. Gleitet nun der Rastkörper in die Position C zurück, dann nimmt er innerhalb der Kulissenöffnung 37 automatisch wieder die in Fig. 1 dargestellte Höhenlage ein, da die ihn tragende Schalthülse 11 im Bereich der Kulissenöffnung 37 frei ist, unter der Wirkung der Feder 27 radial nach außen gerichtet verschoben zu werden. Innerhalb der Kulissenöffnung 37 nimmt der Rastkörper 13 demnach die in Fig. 1 dargestellte neutrale Zwischenposition ein, in welcher er gehindert ist, unter der Einwirkung der (nicht dargestellten) Rückholfedern in die Position A verschwenkt zu werden, da er am Innenumfang der Kulissenöffnung anliegt. Der Kipphebel 1 kann folglich erst dann in die Position A zurückverschwenkt werden, wenn der Rastkörper 13 die unter Bezugnahme auf die Position B wiedergegebene, relative Höhenlage zur Schaltkulisse 3 besitzt. Es ist also erforderlich, daß der Rastkörper auf die Oberseite der Führungsbahnen 39 und 41 gelangt.

Das vorstehend genannte Lösen der Federspeicherbremsanlage aus der Parkbremsstellung, also das Rückführen des Kipphebels aus der Position C über die Position B in die Position A, geschieht dadurch, daß der Fahrer des Fahrzeuges am Schaltgriff 9 radial nach außen gerichtet zieht. Hierbei wird der Schaltgriff relativ zu der mit dem Steuerkörper 5 verbundenen Schaltstange 7 nach außen gerichtet bewegt. Da die Anschlaghülse 29 während dieser nach außen gerichteten Bewegung von der Anschlagschulter 45 mitgenommen wird, erfolgt eine Verspannung der Hebefeder 25 infolge der Verkürzung des Abstandes zwischen dem Anschlagring 31 und der Anschlaghülse 29. Im Schwenkbereich zwischen den Positionen A und B drückt die Hebefeder 25 infolge der vorstehend erläuterten Verspannung die Anschlaghülse 29 bis zum Anschlag an den Anschlagring 47. Gleichzeitig wird hierdurch die axiale Position der Schalthülse 11 festgelegt. Der Rastkörper 13, welcher zwischen den Positionen A und B unter der Verspannung der Rastierfeder 17 auf der Oberseite der Schaltkulisse entlanggleitet, besitzt folglich den in Fig. 1 wiedergegebenen Abstand entsprechend dem Einrastweg S1 bezüglich des unteren Endes der Schalthülse 11, das heißt bezüglich der Schulter 23. Der Schaltkörper 13 weist demnach wiederum denjenigen Freiheitsgrad der Bewegung auf, welchen er benötigt, um im Bereich der Kulissenöffnung 37 relativ zur Schalthülse 11 nach unten gerichtet bewegt zu werden, das heißt in die in Fig. 1 dargestellte Höhenlage.

Aus der vorstehenden Funktionsbeschreibung des Kipphebels 1 ist ersichtlich, daß der Rastkörper 13 im Bereich der Kulissenöffnung 37 vollkommen selbstständig die Rastierbewegung vollzieht, also in die Kulissenöffnung nach unten gerichtet eintaucht. Unkoordinierte Betätigungen des Schaltgriffes, welche auch eine axiale Komponente besitzen können, verbleiben demnach ohne Einfluß auf die Funktion des Rastkörpers. Andererseits ist es mit Hilfe des Schaltgriffes 9 möglich, den Rastkörper 13 in absolut zuverlässiger Weise in die nötige Höhenlage unter das Niveau der Schaltkulisse zu drücken, wenn die Kotrollstellung gemäß Position D erreicht werden soll und es ist andererseits absolut sicher möglich, den Rastkörper 13 mit Hilfe des Schaltgriffes aus der Kulissenöffnung 37 gemäß Position C nach oben gerichtet herauszuheben, wenn ein Zurückschwenken des Kipphebels über die Position B in die Position A vollzogen werden soll. Diese Zurückschwenken kann, wie vorstehend erwähnt wurde, im wesentlichen selbsttätig unter der Einwirkung der (nicht dargestellten) Rückholfedern geschehen.

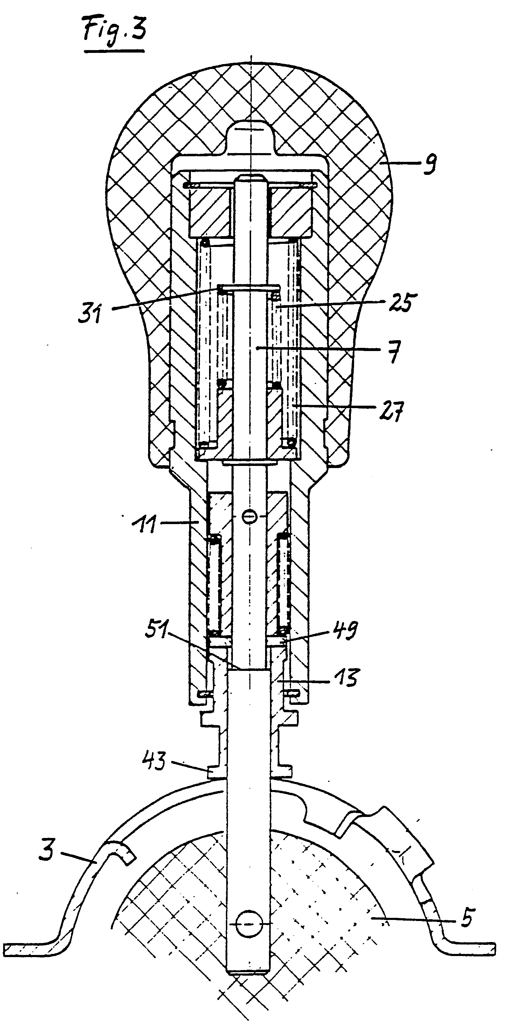

In Fig. 3 der Zeichnung ist eine weitere Ausführungsform der erfindungsgemäßen Konstruktion der Betätigungseinrichtung für Handbremsventile dargestellt. Bei dieser Anordnung ist eine « Umkehr » des Zusammenwirkens zwischen der Schalthülse und dem Rastkörper vorgesehen, und zwar in dem Sinne, daß die Schalthülse am Außenumfang des Rastkörpers angreift, so daß auf die Schutzhülse 15 verzichtet werden kann. Die Rastierfeder 17 wirkt hierbei gegenüber einem axial verschieblichen Anschlagring 49, welcher in der Position nach Fig. 3 auf der Oberseite des Rastkörpers 13 aufliegt. Wird der Kipphebel in die Position C verschwenkt, dann wirkt die Rastierfeder 17 über den Anschlagring 49 auf den Rastkörper ein, bis sich der Anschlagring 49 an einen Absatz 51 der Schaltstange 7 anlegt; dieser Abstand entspricht dem erforderlichen Rastierweg für den Rastkörper 13. Im übrigen ist die Funktion der Anordnung nach Fig. 3 vergleichbar derjenigen der Konstruktion nach Fig. 1, das heißt, der Rastkörper bleibt im wichtigen Moment des Einrastens unbeeinflußt von am Schaltgriff zur Wirkung gelangenden Kräften.

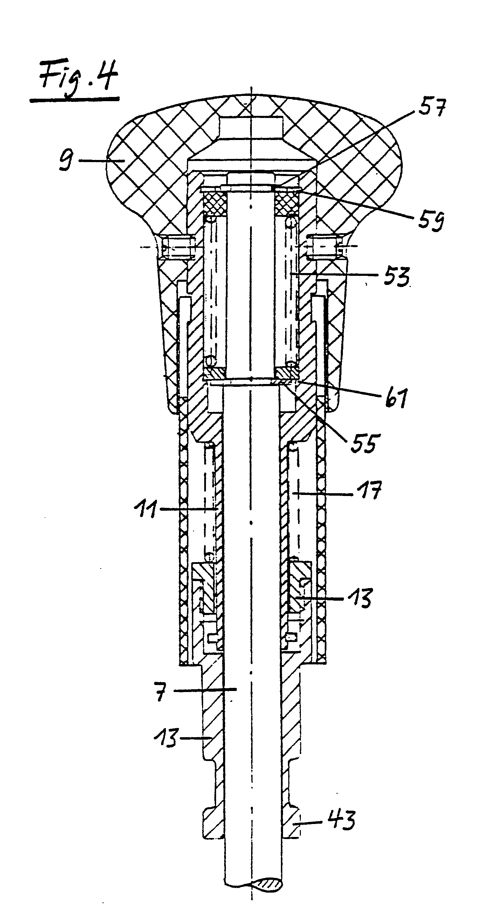

In Figur 4 der Zeichnung ist (ohne Darstellung der Schaltkulisse) eine weitere, besonders vorteilhafte Ausführungsform eines Kipphebels wiedergegeben. Bei dieser Ausführungsform ist im Inneren des Schaltgriffes 9 lediglich eine einzelne Feder 53 vorgesehen. Die Feder 53 stützt sich sowohl an ihrem inneren, der Schaltkulisse zugewandten Ende als auch an ihrem äußeren Ende gemäß Darstellung an Anschlägen der Schaltstange bzw. der Innenwandung des Schaltgriffes ab.

An der Schaltstange 7 sind Anschlagringe 55 und 57 vorgesehen, während an der Innenwandung des Schaltgriffes 9 ein äußerer Anschlagring 59 und eine innere Anschlagschulter 61 vorgesehen sind. Die Feder 53 stützt sich vorteilhafterweise mittels zwischenliegender Ringe an den vorgenannten Anschlägen ab. Wird der Schaltgriff 9 in der Darstellung nach Figur 4 nach unten gerichtet gedrückt, um den Rastkörper 13 in vorstehend beschriebener Weise in die tiefste Lage für die Kontrollstellung zu verschieben, dann wird die Feder 53 gegenüber dem inneren Anschlagring 55 verspannt und übt demgemäß eine nach außen gerichtete Reaktionskraft aus, welche bestrebt ist, den Schaltgriff bei Rückführung des Kipphebels in die Position C wieder nach außen gerichtet zu verschieben. Wird andererseits am Schaltgriff 9, ausgehend von der Position C, gezogen, um den Rastkörper 13 auf das Niveau der Oberseite der Schaltkulisse anzuheben, dann geschieht die Verspannung der Feder 53 gegenüber dem gemäß Figur 4 oberen, das heißt äußeren Anschlagring 57 der Schaltstange 7. Die Feder verspannt also den Schaltgriff nach unten gerichtet, wodurch die Rastierfeder 17 ihrerseits in der Lage ist, den Rastkörper auf die Oberseite der Schaltkulisse zu drücken.

Im Rahmen des der Erfindung eigenen allgemeinen Gedankens ist es natürlich ohne weiteres möglich, daß bekannte Verdrehsicherungen, z. B. Rollen, in den Kipphebel nach Fig. 1, 3 und 4 integriert werden können. Wie vorstehend bereits erläutert wurde, ist es auch möglich, daß die Schaltkulisse im Bereich des Überganges von der Position B in die Position C Druckpunkt-Erhöhungen besitzt.

Bezugszeichenliste

1 Kipphebel
3 Schaltkulisse
5 Steuerkörper
7 Schaltstangen
9 Schaltgriff
11 Schalthülse
13 Rastkörper
15 Schutzhülse
17 Rastierfeder
19 Sicherungsring
21 Anschlagring
23 Schulter
25 Hebefeder
27 Feder
29 Anschlaghülse
31 Anschlagring
33 Schulter
35 Kulissenschlitz
37 Kulissenöffnung
39 Führungsbahn
41 Führungsbahn
43 Rastbund
45 Anschlagschulter
47 Anschlagring
49 Anschlagring
51 Absatz
53 Feder
55 Anschlagring
57 Anschlagring
59 Anschlagring
61 Anschlagschulter

## Patentansprüche

1. Handbremsventil für Bremsanlagen, insbesondere von Kraftfahrzeugen, mit einer Einrichtung zur Betätigung des Hilfs- und Feststellbremssystems, mit einem im Ventilgehäuse schwenkbar geführten, mit einem Steuerkörper (5) zur Betätigung des Handbremsventilmechanismus verbundenen, einen Schaltgriff (9) tragenden Kipphebel (1), welcher unter Führung einer Schaltkulisse (3) in unterschiedliche Wirkpositionen verschwenkbar ist, wobei der Kipphebel (1) einen Mechanismus zum Einrasten und Lösen eines mit der Schaltkulisse (3) zusammenwirkenden Rastkörpers (13) aufweist, dadurch gekennzeichnet, daß der Rastkörper (13) an dem der Schaltkulisse (3) zugewandten Ende einer mit dem Schaltgriff (9) verbundenen und die Schaltstange (7) umgebenden Schalthülse (11) relativ zu dieser höhenverschieblich geführt und nach Maßgabe der Schwenkposition des Kipphebels (1) unter der Einwirkung einer sich an der Schalthülse (11) abstützenden Rastierfeder (17) in eine Rastierposition im Bereich der Kulissenöffnung (37) der Schaltkulisse (3) verschiebbar ist, und daß der Rastkörper (13) bei Axialverschiebung der Schalthülse (11) durch an dieser ausgebildete Anschläge sowohl in Richtung des Steuerkörpers (5) als auch abgewandt vom Steuerkörper verlagerbar ist.

2. Handbremsventil nach Anspruch 1, dadurch gekennzeichnet, daß der die Schalthülse (11) tragende Schaltgriff (9) mittels einer in seinem Inneren geführten, die Schaltstange (7) umgebenden Feder (27) gegenüber einem an der Schaltstange vorgesehenen Anschlag abgestützt ist, derart, daß die Feder (27) bei nach innen gerichteter Bewegung des Schaltgriffes (9) verspannbar ist.

3. Handbremsventil nach Anspruch 2, dadurch gekennzeichnet, daß der an der Schaltstange (7) vorgesehene Anschlag aus einer Anschlaghülse (29) besteht, welche ihrerseits nach außen gerichtet relativ zur Schaltstange beweglich ist und an einem mit der Schaltstange verbundenen Anschlagring (47) außenseitig aufliegt, daß die Feder (27) an ihrem innenseitigen Ende von der Anschlaghülse (29) getragen ist, und daß sich das entgegengesetzte, außenseitige Ende der Feder (27) an einer Schulter (33) abstützt, welche ihrerseits mit dem Schaltgriff (9) verbunden ist und im Inneren desselben die Schaltstange (7), relativ zu diesem verschieblich, umgibt.

4. Handbremsventil nach einem der vorangehenden Ansprüche, dadurch gekennzeichnet, daß eine weitere Feder (Hebefeder 25) zwischen der Anschlaghülse (29) und einem an der Schaltstange (7) angebrachten Anschlagring (31) abgestützt ist, und daß eine an der Schalthülse (11) ausgebildete Anschlagschulter (45) an der der Feder (27) abgewandten Seite der Anschlaghülse (29) in Anlage mit dieser bewegbar ist, derart, daß die Anschlagschulter (45) bei nach außen gerichteter Bewegung des Schaltgriffes (9) die Anschlaghülse (29) entgegen der Verspannung der Hebefeder (25) nach außen gerichtet zu verschieben vermag.

5. Handbremsventil nach Anspruch 1, dadurch gekennzeichnet, daß die Schaltstange (7) im Inneren des Schaltgriffes (9) von einer Feder (53) umgeben ist, welche sich sowohl an ihrem inneren als auch an ihrem äußeren Ende an Anschlägen der Schaltstange (7) und der Innenwandung des konzentrisch die Feder umgebenden Schaltgriffes (9) abstützt, derart, daß die Feder (53) sowohl bei nach innen als auch nach außen gerichteter Betätigung des Schaltgriffes (9) gegenüber dem inneren Anschlag (Anschlagring 55) bzw. dem äußeren Anschlag (Anschlagring 57) der Schaltstange (7) verspannbar ist.

**Claims**

1. Hand brake control valve for braking systems, in particular of motor vehicles, provided with an actuating means for the auxiliary and parking brake system, including a rocking lever (1), which can be rotated in the valve housing and which, being connected to a cam member (5) for the actuation of the hand brake control valve mechanism, is provided with a handle (9) and which is capable, while being guided in a gate (3), of being rotated into different operating positions, the rocking lever (1) being provided with a mechanism for engaging and disengaging of a locking member (13), operating in conjunction with the gate (3), wherein said locking member (13) is guided axially, relative to the actuating sleeve (11), at the end facing the gate (3) of said actuating sleeve (11), which is connected to the handle (9) surrounding the control rod (7), and which can be moved, depending on the rotating position of the rocking lever (1), under the action of a locking spring (17), supported by the actuating sleeve (11), into a locking position in the area of the opening (37) of the gate (3), said locking member (13) being capable of being moved, when the actuating sleeve (11) is displaced axially, both in the direction of the cam member (5) and away from it, by means of limit stops provided at the actuating sleeve (11).

2. Hand brake control valve according to Claim 1, wherein the handle (9), provided with the actuating sleeve (11), is supported, in relation to a limit stop provided at the control rod, by means of a spring (27), which is guided inside the handle (9), surrounding the control rod (7), such that the spring (27) can be compressed when the handle (9) is moved inward.

3. Hand brake control valve according to Claim 2, wherein the limit stop provided at the control rod (7) consists of a limit stop sleeve (29) which, on its turn, can be moved in outward direction, relative to the control rod, and which is supported, on its outside, by a limit stop ring (47) which is connected to the control rod, the spring (27) being supported at its inner end by the limit stop sleeve (29), the opposite, outer end of the spring (27) being supported by a shoulder (33) which, on its turn, is connected to the handle (9) and which, in the inside of the latter, surrounds the control rod (7), which can be displaced relative to the handle (9).

4. Hand brake control valve according to one of the aforementioned claims, wherein a further spring (lifting spring 25) is supported between the limit stop sleeve (29) and a limit stop ring (31), provided at the control rod (7), and a limit stop shoulder (45), provided at the actuating sleeve (11), is capable of moving together with the limit stop sleeve (29), when applied against the latter at its side opposite of the spring (27), such that the limit stop shoulder (45) can displace the limit stop sleeve (29) against the compression of lifting spring (25), when the handle (9) is moved outwards.

5. Hand brake control valve according to Claim 1, in which the control rod (7) inside the handle (9) is surrounded by a spring (53) which, both at its inner and its outer end, is supported by limit stops of the control rod (7) and by the inner wall of the handle (9), which concentrically surrounds the handle such that the spring (53), both when moving the handle (9) inwards or outwards, in relation to the inner limit stop (limit stop ring 55) of the outer limit stop (limit stop ring 57) of the control rod (7), can be compressed.

**Revendications**

1. Robinet de frein à main pour des installations de freinage, en particulier de véhicules automobiles, avec un dispositif pour commander le système de freinage d'urgence ou de stationnement, avec un levier basculant (1) qui est guidé en basculement dans le corps du robinet, qui est relié à un corps de commande (5) pour actionner le mécanisme du robinet de frein à main et qui porte une poignée de commutation (9), lequel levier basculant est susceptible d'être basculé, en étant guidé par une coulisse de commutation (3), dans différentes positions de fonctionnement, et possède un mécanisme pour enclencher et pour libérer un corps d'encliquetage (13) qui coagit avec ladite coulisse de guidage, caractérisé par le fait que le corps d'encliquetage (13) est guidé à l'extrémité, voisine de la coulisse de commutation (3), d'une douille de commutation (11) reliée à la poignée de commutation (9), et entourant la tige de commutation (7), de manière à être déplaçable en hauteur par rapport à ladite douille et à être déplaçable, en fonction de la position de basculement du levier basculant (1) et sous l'action d'un ressort d'encliquetage (17) qui prend appui contre la douille de commutation (11), dans une position d'enclenchement dans la zone de l'ouverture de coulisse (37) de la coulisse de commutation (3), et que le corps d'enclenchement (13) est susceptible, dans le cas du déplacement axial de la douille de commutation (11), d'être déplacé par des butées prévues sur cette dernière, aussi bien en direction du corps de commande (5) qu'en direction de l'éloignement du corps de commande.

2. Robinet de frein à main selon la revendication 1, caractérisé par le fait que la poignée de commutation (9) qui porte la douille de commutation (11) prend appui contre une butée qui est prévue sur la tige de commutation, par l'intermédiaire d'un ressort (27) qui entoure la tige de commutation (7) et qui est guidé par sa partie intérieure, la réalisation étant telle que le ressort (27) est susceptible d'être armé lors d'un déplacement, dirigé vers l'intérieur, de la poignée de commutation (9).

3. Robinet de frein à main selon la revendication 2, caractérisé par le fait que la butée qui est prévue sur la tige de commutation (7) est constituée par une douille de butée (29) qui, à son tour, est déplaçable vers l'extérieur par rapport à la tige de commutation et repose sur une bague de butée (47) qui est reliée à la tige de commutation, que le ressort (27) est porté, à son extrémité intérieure, par la douille de butée (29), et que l'extrémité opposée et extérieure du ressort (27) prend appui contre un épaulement (33) qui, à son tour est relié à la poignée de commutation (9) et entoure, à l'intérieur de celle-ci, la tige de commutation (7) en pouvant se déplacer par rapport à cette dernière.

4. Robinet de frein à main selon l'une des revendications précédentes, caractérisé par le fait qu'un second ressort (ressort de soulèvement 25) prend appui entre la douille de butée (29) et un anneau de butée (31) porté par la tige de commutation (7), et qu'un épaulement de butée (45) qui est réalisé sur la douille de commutation (11), est déplaçable avec le ressort (27) en s'appliquant contre celle-ci, du côté de la douille de butée (29) qui est éloignée dudit ressort (27), la réalisation étant telle que l'épaulement de butée (45), lors du déplacement de la poignée de commutation (9) vers l'extérieur, est susceptible de déplacer la douille de butée (29) vers l'extérieur, à l'encontre de l'armement du ressort de soulèvement (25).

5. Robinet de frein à main selon la revendication 1, caractérisé par le fait que la tige de commutation (7) est entourée, à l'intérieur de la poignée de commutation (9), par un ressort (53) qui prend appui, aussi bien au niveau de son extrémité intérieure que de son extrémité extérieure, contre des butées de la tige de commutation (7) et contre la paroi intérieure de la poignée de commutation (9) qui entoure concentriquement le ressort, la réalisation étant telle que le ressort (53) est susceptible d'être armé aussi bien lors de la commande de la poignée de commutation (9) tant vers l'intérieur que vers l'extérieur, par rapport à la butée intérieure (anneau de butée 55) ou par rapport à la butée extérieure (anneau de butée 57) de la tige de commutation (7).

Fig. 1

0 171 569

## Fig. 2

# Fig.3

Fig.4